# EUROPEAN PATENT APPLICATION

(11) **EP 4 417 058 A1**
(43) Date of publication of application: **21.08.2024**
(21) Application number: 22880885.3
(22) Date of filing: 05.10.2022
(51) Int. Cl.: A22C 17/00, B26D 3/26

(54) **FOODSTUFF TRIMMING DEVICE, AND FOODSTUFF TRIMMING SYSTEM**

(30) Priority: 13.10.2021 JP 2021168152
(71) Applicant: MAYEKAWA MFG. CO., LTD., Tokyo 135-8482 (JP)
(72) Inventor: KASHIHARA Naoya, Tokyo 135-8482 (JP); TANAKA Motomasa, Tokyo 135-8482 (JP); IMAMURA Hikaru, Tokyo 135-8482 (JP)
(74) Representative: Stöckeler, Ferdinand
(86) International application number: PCT/JP2022/037288
(87) International publication number: WO 2023/063189

(57) **Abstract**

A foodstuff trimming device includes a rotary blade (16) that trims an end part of a foodstuff, and a lifting claw block (17) that lifts the end part of the foodstuff and that leads a part of the foodstuff to be cut to the rotary blade (16). The lifting claw block (17) includes a guide surface (26) of which an upper surface is inclined downward toward a front end portion receiving the end part of the foodstuff, a reception groove (27) which is formed behind the guide surface (26) and into which the rotary blade (16) is inserted from above, and an air blowing portion (28) which blows air downwards to the space below the front end portion.

## Description

### [Technical Field]

The present invention relates to a foodstuff trimming device trimming an end part of a foodstuff such as edible meat, and a foodstuff trimming system.

Priority is claimed on Japanese Patent Application No. 2021-168152, filed October 13, 2021, the content of which is incorporated herein by reference.

### [Background Art]

In a step of producing edible meat, edible meat that has gone through steps of slaughtering, butchering, and deboning may contain unnecessary skin, fat, and tendon. All of this removal and shaping (trimming) is performed manually as of now. Working with an edge tool is dangerous, and working at a low temperature is extremely heavy labor. Moreover, in recent years, automation using robots has been required due to labor shortage and the like.

Regarding devices for automating removal of surplus parts of edible meat, devices using a water jet and the like are known. However, since the devices are expensive and large, it is desired to devise devices which are cheaper and smaller.

Except for technologies of handling foodstuff, a device that trims thin workpieces such as cloth and paper using a rotary blade is known (for example, refer to

### Patent Document 1).

In the device disclosed in Patent Document 1, a cutting table is disposed below a round-type rotary blade, and the cutting table is provided with a cutting groove into which the rotary blade is inserted from above and a lifting claw which guides a workpiece in the direction of the cutting groove. In the lifting claw, an upper surface side thereof is inclined downward to the front such that it converges toward a front end portion side.

### [Citation List]

### [Patent Document]

### [Patent Document 1]

Japanese Unexamined Utility Model Application, First Publication No. S63-8874

### [Summary of Invention]

### [Technical Problem]

It is conceivable that the technology disclosed in Patent Document 1 be applied to a device that trims an end part (surplus part) of a foodstuff such as edible meat. However, foodstuff such as edible meat is soft and likely to stick to a part on a placement base, and the shape and the size of a trimming part vary. Therefore, it is difficult to stably lead a trimming target part to a part on a lifting claw, and there is concern that trimming of an end part (trimming target part) of a foodstuff may become unstable. Specifically, during lifting of an end part of a foodstuff by a lifting claw, when a tip portion of the lifting claw comes into contact with the end part of the foodstuff, the end part of the foodstuff may be deflected in an irregular direction so that the end part of the foodstuff will no longer be lead in the direction of a rotary blade in a stable posture.

Aspects of the present invention provide a foodstuff trimming device capable of stably trimming an end part of a foodstuff with a simple constitution, and a foodstuff trimming system.

### [Solution to Problem]

In order to resolve the foregoing problems, a foodstuff trimming device and a foodstuff trimming system according to the present invention have employed the following constitutions.

That is, a foodstuff trimming device according to the present invention includes a rotary blade that trims an end part of a foodstuff, and a lifting claw block that lifts the end part of the foodstuff and that leads a part of the foodstuff to be cut to the rotary blade. The lifting claw block includes a guide surface of which an upper surface is inclined downward toward a front end portion receiving the end part of the foodstuff, a reception groove which is formed behind the guide surface and into which the rotary blade is inserted from above, and an air blowing portion which blows air downwards to the space below the front end portion.

According to the foregoing constitution, if a foodstuff is conveyed to the foodstuff trimming device, air is blown from the air blowing portion downwards to the space below a tip portion of the lifting claw block. Accordingly, the end part of the foodstuff is blown upward and smoothly rides over the guide surface of the lifting claw block. The end part of edible meat road over the guide surface is led to a reception groove part on the lifting claw block along the guide surface. In the reception groove part, the end part of edible meat is trimmed due to rotation of the rotary blade.

The air blowing portion may include an air guide groove that opens at the bottom of the lifting claw block with a predetermined width and that communicates with a space below the front end portion of the lifting claw block.

In this case, when air is supplied to the air guide groove, the air is blown downwards to the space below the front end portion of the lifting claw block through the air guide groove. At this time, a reaction force caused by the blowing pressure of the air acts from a placement surface where the foodstuff is placed to the lifting claw block. Accordingly, an appropriate gap is maintained between the lifting claw block and the placement surface. As a result, interference of the lifting claw block with the placement surface of the foodstuff is avoided, and the end part of the foodstuff can be stably trimmed.

An inclined piece extending in a manner of being inclined downward toward the front end portion may be provided on a front end side of the air guide groove.

In this case, air blown to the front end portion of the lifting claw block through the air guide groove hits the inclined piece so that it is blown downwards to the space below the front end portion of the lifting claw block. As a result, blown air gets into a lower surface side of the end part of the foodstuff on the placement surface, and the end part of the foodstuff is more likely to be raised upward. Therefore, when this constitution is employed, the end part of the foodstuff can be lifted more stably by the lifting claw block, and the end part of the foodstuff can be reliably trimmed by the rotary blade.

A part of the air guide groove may be disposed under the reception groove and communicate with the reception groove in an upward-downward direction.

In this case, a part of air supplied to the inside of the air guide groove flows into a gap between the reception groove and the rotary blade. For this reason, broken debris of the foodstuff adhering to a circumferential edge of the reception groove comes off due to the air, and therefore deposition of broken debris at the circumferential edge of the reception groove is prevented. Accordingly, even when the foodstuff trimming device is continuously used, broken debris of the foodstuff deposited at the circumferential edge of the reception groove can be prevented from obstructing stable leading of the end part of the foodstuff to the rotary blade. Therefore, when this constitution is employed, the end part of the foodstuff can always be stably trimmed.

In addition, in the case of this constitution, since the reception groove opens at the bottom of the lifting claw block through the air guide groove, the inside of the reception groove can be easily cleaned from below the lifting claw block at the time of maintenance.

It is desirable that a gap be secured between the lifting claw block and a placement surface where the foodstuff is placed.

In this case, when the placement surface of a conveyance device having a foodstuff placed thereon passes through the space below the lifting claw block, interference of the placement surface with the lifting claw block can be avoided. In addition, in this foodstuff trimming device, since the end part of the foodstuff can be raised by blowing air from the air blowing portion to the front end portion of the lifting claw block, even if there is a gap between the lifting claw block and the placement surface, the end part of the foodstuff can be reliably led to a part on the guide surface of the lifting claw block.

In addition, a foodstuff trimming system according to the present invention includes a conveyance device that conveys a foodstuff in one substantially horizontal direction, a foodstuff trimming device that trims an end part of the foodstuff, a cross-movement device that moves the foodstuff trimming device in a substantially horizontal direction crossing a conveyance direction of the conveyance device, and a swing device that swings the foodstuff trimming device around a vertical axis. The foodstuff trimming device includes a rotary blade which trims the end part of the foodstuff, and a lifting claw block which lifts the end part of the foodstuff and leads a part of the foodstuff to be cut to the rotary blade. The lifting claw block includes a guide surface of which an upper surface is inclined downward toward a front end portion of the lifting claw block which receives the end part of the foodstuff, a reception groove which is formed behind the guide surface and into which the rotary blade is inserted from above, and an air blowing portion which blows air downwards to the space below the front end portion.

According to the foregoing constitution, if a foodstuff is conveyed by the conveyance device in the direction of the foodstuff trimming device at a predetermined speed, the angle around the vertical axis of the foodstuff trimming device is adjusted by the swing device such that a trimming angle of a particular end part of the foodstuff and the direction of the rotary blade matches with each other. In this state, the foodstuff trimming device is operated to move by the cross-movement device in a direction crossing the conveyance direction of the conveyance device at a predetermined speed. As a result, the rotary blade of the foodstuff trimming device crosses the particular end part of the foodstuff in a direction determined by a composite vector of a movement vector of the foodstuff by the conveyance device and a movement vector of the foodstuff trimming device by the cross-movement device. At this time, the particular end part of the foodstuff is trimmed at the position and the angle determined in advance.

In addition, when the foodstuff trimming device trims an end part of a foodstuff, air is blown from the air blowing portion of the lifting claw block downwards to the space below the front end portion of the lifting claw block so that the end part of the foodstuff stably rides over the guide surface of the lifting claw block.

### [Advantageous Effects of Invention]

In the foodstuff trimming device and the foodstuff trimming system according to the present invention, the lifting claw block is provided with the air blowing portion blowing air downwards to the space below the front end portion of the lifting claw block. For this reason, due to air blown from the air blowing portion, an end part of a foodstuff can be raised from the placement surface and can stably ride over the guide surface on the lifting claw block. Therefore, when the foodstuff trimming device and the foodstuff trimming system according to the present invention are employed, an end part of a foodstuff can be stably trimmed by the rotary blade with a simple constitution.

### [Brief Description of Drawings]

FIG. 1 is a view of a schematic constitution of a foodstuff trimming system of an embodiment.
FIG. 2 is a plan view illustrating an example of a foodstuff to be trimmed.
FIG. 3 is a perspective view of a foodstuff trimming device of the embodiment.
FIG. 4 is a perspective view illustrating a lifting claw block of the foodstuff trimming device of the embodiment.
FIG. 5 is a longitudinal sectional view of the foodstuff trimming device of the embodiment.
FIG. 6 is a longitudinal sectional view of the foodstuff trimming device of the embodiment.

### [Description of Embodiment]

Hereinafter, an embodiment of the present invention will be described on the basis of the drawings.

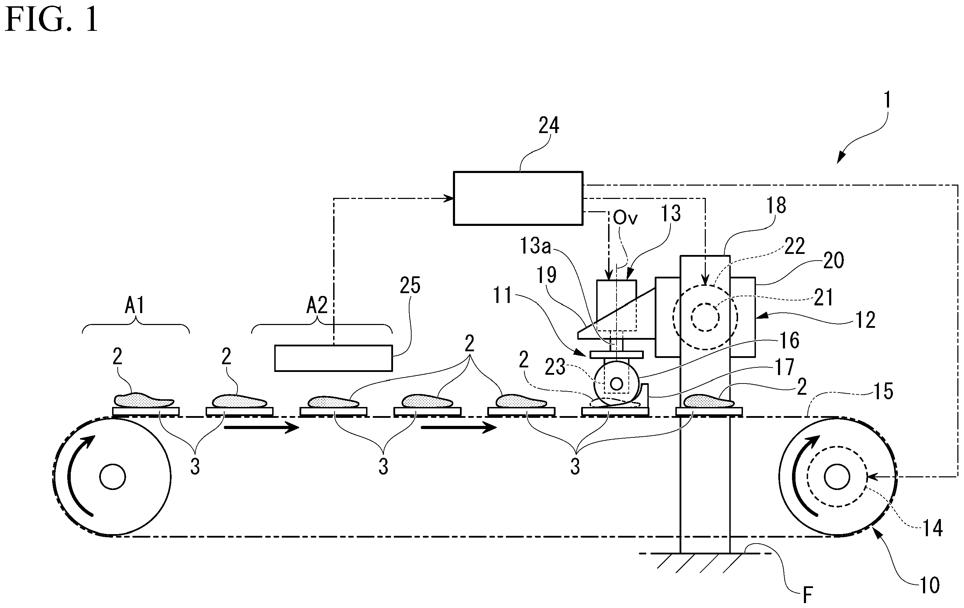

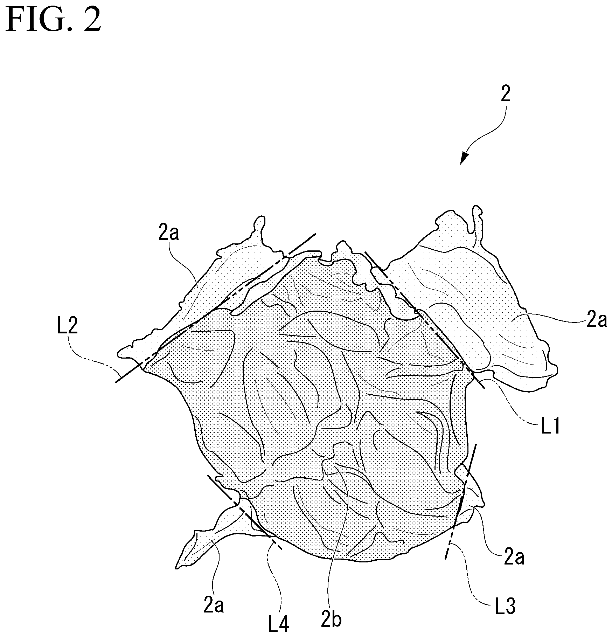

FIG. 1 is a view of a schematic constitution of a foodstuff trimming system 1 of the present embodiment. FIG. 2 is a plan view illustrating a piece of meat 2 of a chicken thigh that is an example of a foodstuff handled by the foodstuff trimming system 1. The piece of meat 2 is a piece of thigh meat that has gone through steps of butchering and deboning and has been completely expanded along a disposition of bones.

As illustrated in FIG. 1, the foodstuff trimming system 1 includes a conveyance device 10 that conveys placement bases 3 (for example, resin pallets) each having the piece of meat 2 placed on the upper surface thereof in one substantially horizontal direction, a foodstuff trimming device 11 that trims an end part 2a of the piece of meat 2 (refer to FIG. 2) placed on the placement base 3, a cross-movement device 12 that moves the foodstuff trimming device 11 in the substantially horizontal direction crossing a conveyance direction of the conveyance device 10 (which will hereinafter be simply referred to as "an orthogonal direction"), and a swing device 13 that swings the foodstuff trimming device 11 around a vertical axis Ov.

Although FIG. 1 shows a form of the conveyance device 10 in which the pieces of meat 2 are placed on the placement bases 3 such as pallets, the conveyance device 10 may be a device in which the pieces of meat 2 are placed on a continuously moving conveyor belt and conveyed.

The conveyance device 10 includes an endless belt 15 which is rotatively driven by a servomotor 14. A plurality of placement bases 3 are attached to the endless belt 15 along a feeding direction of the endless belt 15. On the upstream side of the conveyance device 10, a placement area A1 where the pieces of meat 2 from which cartilages and the like have been removed are placed by a worker, and an image capturing area A2 where the image information of the pieces of meat 2 on the placement bases 3 is acquired through an image capturing device 25 are provided. The foodstuff trimming device 11, the cross-movement device 12, the swing device 13, and the like are disposed on the downstream of the image capturing area A2 of the conveyance device 10.

The foodstuff trimming device 11 includes a rotary blade 16 which trims the end part 2a of the piece of meat 2, and a lifting claw block 17 which lifts the end part 2a of the piece of meat 2 placed on the placement base 3 and leads the part of the piece of meat 2 to be cut to the rotary blade 16. The rotary blade 16 is a round-type rotary blade and is rotatively driven by a motor 23. A rotation shaft of the motor 23 extends in the horizontal direction.

The cross-movement device 12 is attached to an upper portion of a support frame 18 (a position above the conveyance device 10) installed on a floor surface F. In the cross-movement device 12, the support arm 19 is guided by the linear guide 20 and can move in the orthogonal direction. The support arm 19 is supported by a ball screw 21 extending along the orthogonal direction. The ball screw 21 is rotatively driven by a servomotor 22. Therefore, the support arm 19 is operated to move in the orthogonal direction in response to rotation of the servomotor 22.

The swing device 13 is attached to the support arm 19. The swing device 13 is constituted of a servomotor with a decelerator. A rotation shaft 13a of the servomotor extends downward along the vertical axis Ov, and the foodstuff trimming device 11 is attached to a lower end of the rotation shaft 13a.

Each of the servomotors of the conveyance device 10, the cross-movement device 12, and the swing device 13 is controlled by a control device 24. The control device 24 acquires the image information of the pieces of meat 2 captured by the image capturing device 25 in the image capturing area A2 and determines a cutting position and a cutting angle of each piece of meat 2 on the basis of the acquired image information. The control device 24 controls each of the servomotors such that the part of each piece of meat 2 to be cut can be trimmed by the rotary blade 16 of the foodstuff trimming device 11.

The piece of meat 2 which is placed on the placement base 3 and conveyed to the foodstuff trimming device 11 has a form as illustrated in FIG. 2, for example.

In the piece of meat 2 illustrated in FIG. 2, four trimming target parts such as skin, fat, and tendon (these parts will hereinafter be simply referred to as "end parts 2a") are disposed around a main body part 2b of the piece of meat 2. In the present embodiment, based on the image information acquired from the image capturing device 25 as described above, the cutting position and the cutting angle of each end part 2a are determined, and each end part 2a is cut by the rotary blade 16 along cutting lines L1, L2, L3, and L4.

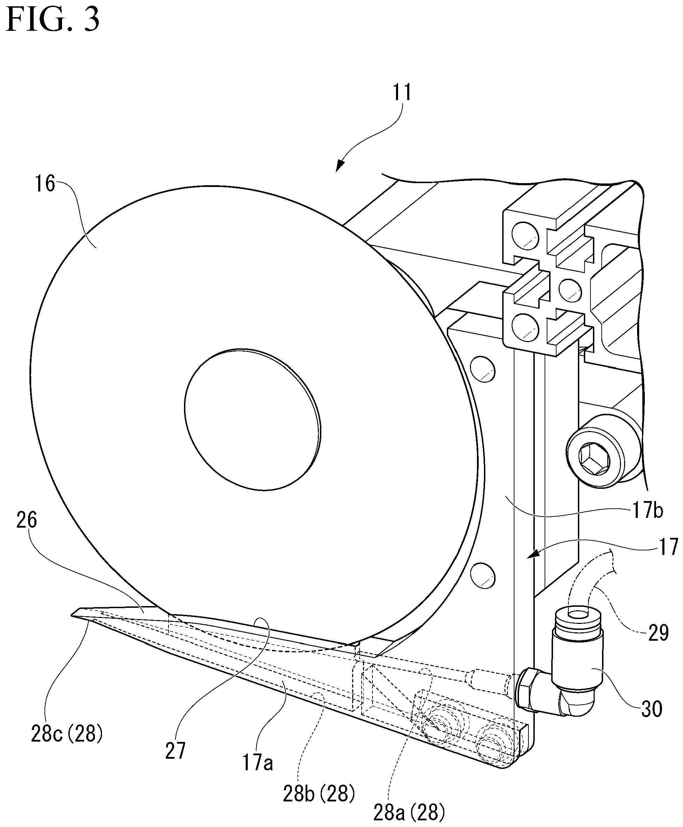

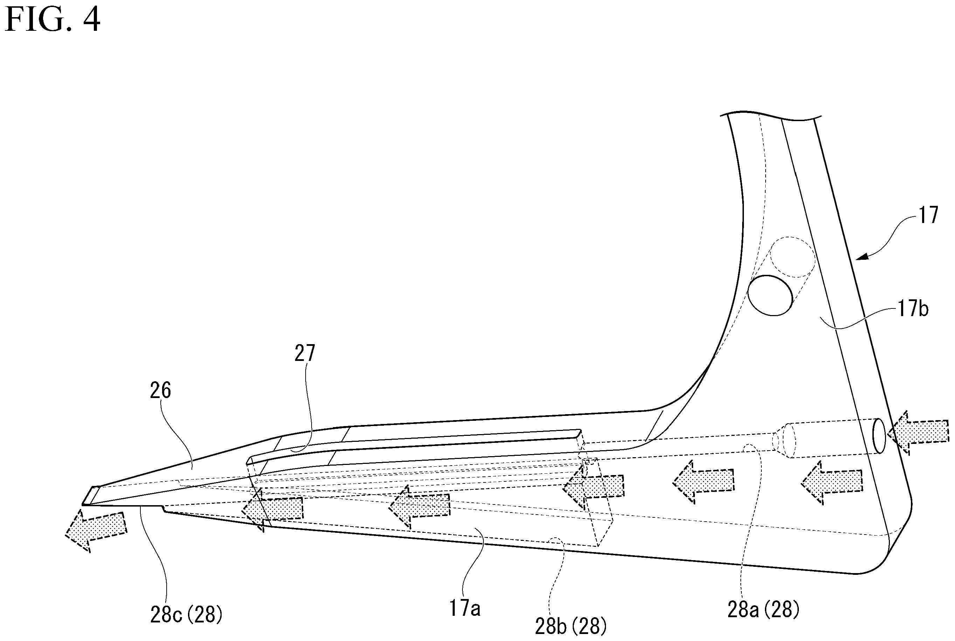

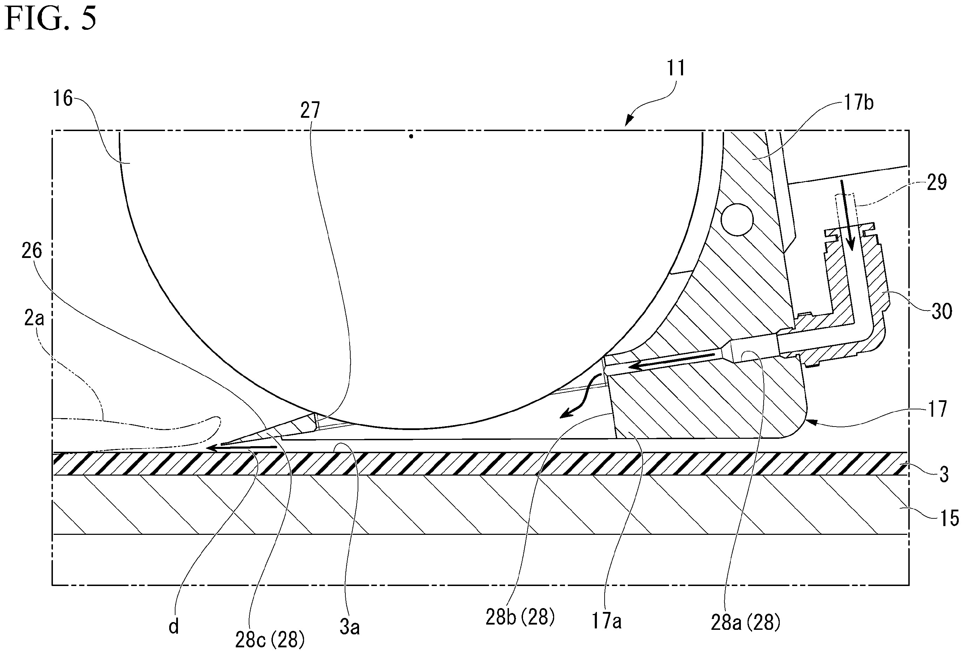

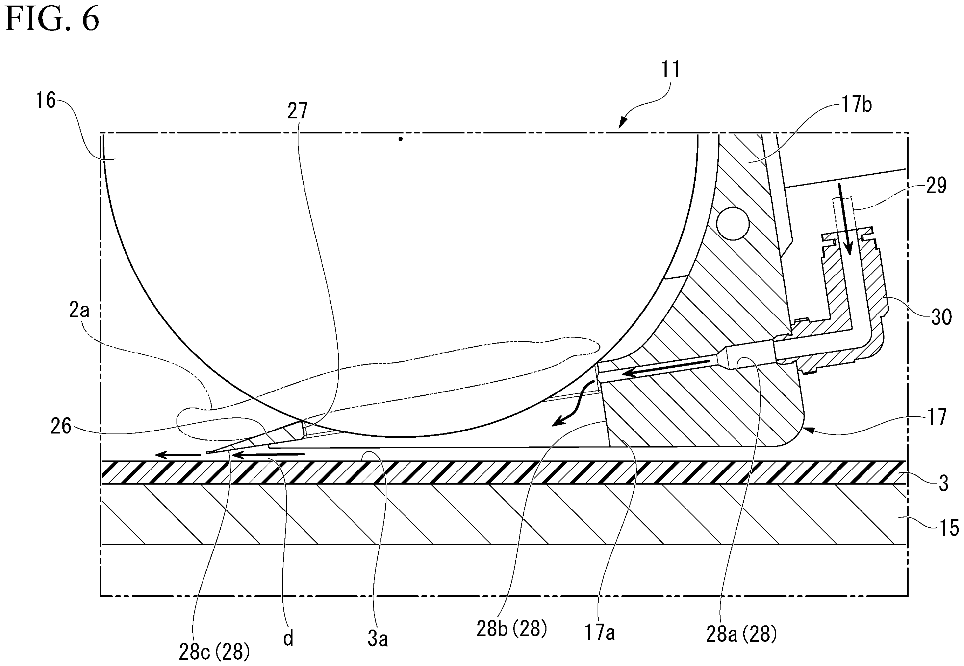

FIG. 3 is a perspective view of the foodstuff trimming device 11, and FIG. 4 is a perspective view of the lifting claw block 17 of the foodstuff trimming device 11. FIGS. 5 and 6 are longitudinal sectional views of the foodstuff trimming device 11. FIG. 5 illustrates a state immediately before the end part 2a of the piece of meat 2 on the placement base 3 is trimmed, and FIG. 6 illustrates a state in which the end part 2a of the piece of meat 2 is being trimmed.

As illustrated in these diagrams, the lifting claw block 17 of the foodstuff trimming device 11 is formed of a metal and has substantially an L-shape in a side view. That is, the lifting claw block 17 has a block main body part 17a which extends in the horizontal direction with a substantially uniform width, and a block attachment portion 17b which extends vertically upward from one end side of the block main body part 17a in an extension direction with a substantially uniform width. The other end side of the block main body part 17a in the extension direction becomes a side where the piece of meat is received when the piece of meat 2 is placed on the placement base 3 and conveyed. Hereinafter, the other end portion of the block main body part 17a in the extending direction will be referred to as "a front end portion", and one end side portion of the block main body part 17a in the extending direction will be referred to as "a rear portion".

The upper surface of the block main body part 17a is gently inclined downward toward the front end portion side from the rear portion to a part near the front end portion of a central region in the extension direction. Hereinafter, this part will be referred to as "a gentle inclination region". A part of the upper surface of the block main body part 17a closer to the front end portion than the gentle inclination region is inclined downward toward the front end portion at a steeper angle than the gentle inclination region. This part inclined downward at a steep angle serves as a guide surface 26 which guides the end part 2a of the piece of meat 2. A reception groove 27 into which a lower region of the rotary blade 16 is inserted from above is formed in the gentle inclination region on the upper surface of the block main body part 17a. The reception groove 27 is formed to have a slit shape in the extension direction of the block main body part 17a substantially at the center of the block main body part 17a in a width direction.

In addition, an air blowing portion 28 blowing high-pressure air downwards to the space below the front end portion of the block main body part 17a is provided in the block main body part 17a. The air blowing portion 28 includes an air introduction hole 28a which extends forward from an end surface of the block main body part 17a on the rear portion side, an air guide groove 28b which opens on the bottom of the block main body part 17a (lifting claw block 17) with a predetermined width from the central region of the block main body part 17a to a part near the front end portion in the extension direction, and an inclined piece 28c which extends in a manner of being inclined downward toward the front end portion of the block main body part 17a at a front end side of the air guide groove 28b.

A connection plug 30 for connecting an air introduction hose 29 is attached to a rear end portion of the air introduction hole 28a. The air introduction hose 29 is connected to an air supply device (not illustrated). High-pressure air is supplied from the air supply device to the air introduction hole 28a through the air introduction hose 29.

In the block main body part 17a, the air guide groove 28b is formed over a range with a substantially uniform width from the position communicating with the air introduction hole 28a to a part near a root portion of the inclined piece 28c. A main region of the air guide groove 28b excluding a part on the front end side is disposed below the reception groove 27. The air guide groove 28b communicates with the reception groove 27 in an upward-downward direction. The groove width of the air guide groove 28b is sufficiently wider than the groove width of the reception groove 27. For this reason, the blowing width on a front portion side of the air blowing portion 28 determined based on the groove width of the air guide groove 28b is set to be sufficiently wide compared to the thickness of the rotary blade 16 (width of the reception groove 27).

In addition, the block attachment portion 17b of the lifting claw block 17 is integrally fixed to a block (a block fixed to the rotation shaft 13a of the swing device 13) supporting the motor 23 for driving a rotary blade (refer to FIG. 1) by bolt fastening or the like.

Here, the lifting claw block 17 is held by the swing device 13 such that a minute gap d is provided between the lifting claw block 17 and an upper surface 3a (placement surface) of the placement base 3 where the piece of meat 2 is placed as illustrated in FIGS. 5 and 6 when the end part of the piece of meat 2 is actually trimmed by the foodstuff trimming device 11. As indicated by the arrow in FIGS. 5 and 6, high-pressure air which has been introduced into the air guide groove 28b through the air introduction hole 28a flows to the front end portion side through the gap d between a lower surface of the block main body part 17a on the front end portion side and the upper surface 3a of the placement base 3.

In addition, the inclined piece 28c is inclined downward toward the front end portion of the block main body part 17a from a position slightly higher than a lower end of a front edge portion of the air guide groove 28b. More specifically, in the inclined piece 28c, the upper surface side constitutes the front end side part of the guide surface 26, and the lower surface side is inclined downward toward the front end portion side from a position higher than the lower end of the front edge portion of the air guide groove 28b. A front end portion of the inclined piece 28c extends to a position lower than other parts of the block main body part 17a on the lower surface (a position close to the upper surface 3a of the placement base 3). Therefore, high-pressure air flowing to the front end portion side along the air guide groove 28b is guided to a lower surface of the inclined piece 28c and is blown downwards to the space below the front end portion of the block main body part 17a. At this time, since the gap between the upper surface 3a of the placement base 3 and the inclined piece 28c is narrow at the front end portion of the inclined piece 28c, the flow speed of air blown forward is increased.

### <Operation of foodstuff trimming system 1>

Subsequently, operation of the foodstuff trimming system 1 will be described.

In the placement area A1 illustrated in FIG. 1, the piece of meat 2 is placed by a worker on the placement base 3 conveyed by the conveyance device 10. Thereafter, the piece of meat 2 which has moved to the image capturing area A2 together with the placement base 3 is subjected to image capturing by the image capturing device 25, and captured image information is sent to the control device 24. In the control device 24, the cutting position and the cutting angle of the piece of meat 2 are determined based on the sent image information, and a control signal is output to the swing device 13 and the cross-movement device 12.

The swing device 13 and the cross-movement device 12 start to operate on the basis of a control signal from the control device 24 at the point of time when the target piece of meat 2 on the placement base 3 moves to a prescribed position. Specifically, first, the swing device 13 swings such that the direction of the rotary blade 16 of the foodstuff trimming device 11 matches with the cutting angle (angle of the cutting line) of the end part 2a (trimming target) of the piece of meat 2. Thereafter, the cross-movement device 12 operates such that the foodstuff trimming device 11 moves in a direction orthogonal to the conveyance direction of the conveyance device 10 at a predetermined speed. Meanwhile, the rotary blade 16 of the foodstuff trimming device 11 rotates at a predetermined rotation speed. As a result, the rotary blade 16 of the foodstuff trimming device 11 crosses the end part 2a (which is trimming target) of the piece of meat 2 in a direction determined by a composite vector of a movement vector of the placement base 3 (piece of meat 2) by the conveyance device 10 and a movement vector of the foodstuff trimming device 11 by the cross-movement device 12. At this time, the end part 2a of the piece of meat 2 is trimmed at the position and the angle determined in advance.

In addition, when the end part of the piece of meat 2 is trimmed by the rotary blade 16 of the foodstuff trimming device 11, as illustrated in FIG. 5, high-pressure air is blown from the air blowing portion 28 of the lifting claw block 17. Since high-pressure air is blown downwards to the space below the front end portion of the lifting claw block 17, it is blown to the end part 2a of the piece of meat 2 on the placement base 3 approaching the front end portion of the lifting claw block 17 in a manner of getting into the lower surface side thereof. As a result, as illustrated in FIG. 5, the end part 2a of the piece of meat 2 is raised upward and stably rides over the guide surface 26 of the lifting claw block 17.

Thereafter, when relative movement of the piece of meat 2 and the foodstuff trimming device 11 proceeds, the end part 2a of the piece of meat 2 moves to the position of the reception groove 27 while being guided by the guide surface 26, and the cutting target part is cut by the rotary blade 16 as illustrated in FIG. 6.

### <Effects of embodiment>

As above, in the foodstuff trimming device 11 of the present embodiment, the lifting claw block 17 is provided with the air blowing portion 28 blowing air downwards to the space below the front end portion of the lifting claw block 17. For this reason, due to air blown from the air blowing portion 28, the end part 2a of the piece of meat 2 can be raised from the upper surface of the placement base 3 and can stably ride over the guide surface 26 on the lifting claw block 17. As a result, the end part 2a of the piece of meat 2 is led to the rotary blade 16 along the guide surface 26 in a stable posture, and the cutting target part is reliably trimmed. In addition, even when there is a hole or a recess in the end part 2a of the piece of meat 2, since the end part 2a of the piece of meat 2 can ride over the guide surface 26 by blowing air, trimming of the end part 2a of the piece of meat 2 can be reliably performed. Therefore, when the foodstuff trimming device of the present embodiment is employed, the end part 2a of the piece of meat 2 can be stably trimmed by the rotary blade 16 with a simple constitution.

In addition, in the foodstuff trimming device 11 of the present embodiment, the air guide groove 28b opening downward with a predetermined width is provided in the lifting claw block 17 and the air guide groove 28b communicates with the space below the front end portion of the lifting claw block 17, thereby constituting a part of the air blowing portion 28. For this reason, when air is supplied to the air guide groove 28b, the air is blown downwards to the space below the front end portion of the lifting claw block 17 through the gap between the air guide groove 28b and the upper surface 3a of the placement base 3. At this time, since the lifting claw block 17 receives a reaction force caused by the blowing pressure of air from the upper surface 3a of the placement base 3, an appropriate gap is maintained between the lifting claw block 17 and the placement base 3.

Therefore, when this constitution is employed, interference of the lifting claw block 17 with the upper surface 3a of the placement base 3 is avoided, and the end part 2a of the piece of meat 2 can be stably trimmed.

In addition, in the foodstuff trimming device 11 of the present embodiment, the inclined piece 28c extending in a manner of being inclined downward toward the front end portion of the lifting claw block 17 is provided on the front end side of the air guide groove 28b of the lifting claw block 17. For this reason, air blown to the front end portion of the lifting claw block 17 through the air guide groove 28b hits the inclined piece 28c so that it is blown downwards to the space below the front end portion of the lifting claw block 17. As a result, blown air gets into the lower surface side of the end part 2a of the piece of meat 2 on the placement base 3, and the end part 2a of the piece of meat 2 is more likely to be raised upward.

Therefore, when this constitution is employed, the end part 2a of the piece of meat 2 can be lifted more stably by the lifting claw block 17, and the end part 2a of the piece of meat 2 can be reliably trimmed by the rotary blade 16.

Moreover, in the foodstuff trimming device 11 of the present embodiment, a part of the air guide groove 28b is disposed below the reception groove 27 of the lifting claw block 17 and communicates with the reception groove 27 in the upward-downward direction. For this reason, a part of air supplied to the inside of the air guide groove 28b flows into a gap between the reception groove 27 and the rotary blade 16. Accordingly, broken debris of the piece of meat 2 adhering to a circumferential edge of the reception groove 27 during rotation of the rotary blade 16 comes off due to the air, and therefore deposition of broken debris at the circumferential edge of the reception groove 27 is prevented. As a result, even when the foodstuff trimming device 11 is continuously used, broken debris of the piece of meat 2 deposited at the circumferential edge of the reception groove 27 can be prevented from obstructing stable leading of the end part 2a of the piece of meat 2 to the rotary blade 16. Therefore, when this constitution is employed, the end part 2a of the piece of meat 2 can always be stably trimmed.

In addition, in the foodstuff trimming device 11 having this constitution, since the reception groove 27 opens on the bottom side of the lifting claw block 17 through the air guide groove 28b, there is an advantage in that the inside of the reception groove 27 can be easily cleaned from below the lifting claw block 17 at the time of maintenance.

In addition, in the foodstuff trimming device 11 having this constitution, the gap d is secured between the lifting claw block 17 and the upper surface 3a (placement surface) of the placement base 3. For this reason, when the upper surface 3a (placement surface) of the placement base 3 having the piece of meat 2 placed thereon passes through the space below the lifting claw block 17, interference of the upper surface 3a of the placement base 3 with the lifting claw block 17 can be avoided. In the foodstuff trimming device 11 of the present embodiment, since the end part of the piece of meat 2 can be raised upward by blowing air from the air blowing portion 28 to the front end portion of the lifting claw block 17, even if there is the gap d between the lifting claw block 17 and the upper surface 3a of the placement base 3, the end part of the piece of meat 2 can be reliably led to a part on the guide surface 26 of the lifting claw block 17.

The present invention is not limited to the foregoing embodiment, and various design changes can be made within a range not departing from the scope thereof.

For example, in the foregoing embodiment, foodstuff having end parts to be trimmed is a piece of chicken meat (edible meat), but foodstuff to be handled is not limited to pieces of meat. Foodstuff may be various other foodstuff such as wrappers of gyoza and shumai, and thin omelet. The foodstuff trimming device according to the present invention is particularly effective when handling soft foodstuff that is likely to stick to the placement base or the like.

### [Reference Signs List]

1 Foodstuff trimming system
2 Piece of meat (foodstuff)
3a Upper surface (placement surface)
2a End part
10 Conveyance device
11 Foodstuff trimming device
12 Cross movement device
13 Swing device
16 Rotary blade
17 Lifting claw block
26 Guide surface
27 Reception groove
28 Air blowing portion
28b Air guide groove
28c Inclined piece
d Gap

## Claims

1. A foodstuff trimming device comprising:
a rotary blade that trims an end part of a foodstuff; and
a lifting claw block that lifts the end part of the foodstuff and that leads a part of the foodstuff to be cut to the rotary blade,
wherein the lifting claw block includes
a guide surface of which an upper surface is inclined downward toward a front end portion receiving the end part of the foodstuff,
a reception groove which is formed behind the guide surface and into which the rotary blade is inserted from above, and
an air blowing portion which blows air downwards to a space below the front end portion.

2. The foodstuff trimming device according to claim 1,
wherein the air blowing portion includes an air guide groove that opens on a bottom of the lifting claw block with a predetermined width and that communicates with the space below the front end portion of the lifting claw block.

3. The foodstuff trimming device according to claim 2,
wherein an inclined piece extending in a manner of being inclined downward toward the front end portion is provided on a front end side of the air guide groove.

4. The foodstuff trimming device according to claim 2 or 3,
wherein a part of the air guide groove is disposed under the reception groove and communicates with the reception groove in an upward-downward direction.

5. The foodstuff trimming device according to any one of claims 1 to 4,
wherein a gap is secured between the lifting claw block and a placement surface where the foodstuff is placed.

6. A foodstuff trimming system comprising:
a conveyance device that conveys a foodstuff in one substantially horizontal direction;
a foodstuff trimming device that trims an end part of the foodstuff;
a cross-movement device that moves the foodstuff trimming device in a substantially horizontal direction crossing a conveyance direction of the conveyance device; and
a swing device that swings the foodstuff trimming device around a vertical axis,
wherein the foodstuff trimming device includes
a rotary blade which trims the end part of the foodstuff, and
a lifting claw block which lifts the end part of the foodstuff and leads a part of the foodstuff to be cut to the rotary blade, and
the lifting claw block includes
a guide surface of which an upper surface is inclined downward toward a front end portion of the lifting claw block which receives the end part of the foodstuff,
a reception groove which is formed behind the guide surface and into which the rotary blade is inserted from above, and
an air blowing portion which blows air downwards to a space below the front end portion.
